# EUROPEAN PATENT SPECIFICATION

(11) **EP 2 224 681 B1**
(45) Date of publication and mention of the grant of the patent: **04.05.2011**
(21) Application number: 09154005.4
(22) Date of filing: 27.02.2009
(51) Int. Cl.: H04L 29/08, H04W 4/06, G06Q 30/00, H04L 12/58, H04L 29/06

(54) **Communications system providing personalized mobile wireless communications device notifications and related methods**
Kommunikationssystem mit einer personalisierten mobilen Funkkommunikationsvorrichtungsnachrichten und zugehörige Verfahren
Système de communications fournissant des notifications à un dispositif de communications sans fil mobile et procédés correspondants

(43) Date of publication of application: 01.09.2010
(73) Proprietor: RESEARCH IN MOTION LIMITED, Waterloo, Ontario N2L 3W8 (CA)
(72) Inventor: Bosan, Sorel, Waterloo Ontario N2L 3L3 (CA); Zima, Janice, Waterloo Ontario N2L 3L3 (CA); Brown, Michael K., Waterloo Ontario N2L 3L3 (CA)
(74) Representative: Roberts, Gwilym Vaughan

(56) References cited:
- US-A1- 2003 208 588
- US-A1- 2004 083 271
- US-A1- 2005 282 556
- US-B1- 7 020 460

## Description

### Technical Field

The present disclosure relates to the field of communications systems, and, more particularly, to mobile wireless communications systems and related methods.

### Background

Mobile communications systems continue to grow in popularity and have become an integral part of both personal and business communications. Mobile telephones allow users to place and receive voice calls most anywhere they travel. Moreover, as mobile telephone technology has increased, so too has the functionality of mobile devices and the different types of devices available to users. For example, many mobile devices now incorporate personal digital assistant (PDA) features such as calendars, address books, task lists, etc. Moreover, such multi-function devices may also allow users to wirelessly send and receive electronic mail (email) messages and access the Internet via a cellular network and/or a wireless local area network (WLAN), for example.

As a result, users continue to spend more time using their mobile devices during the course of a day, as opposed to early cellular phones that were used only for phones calls. This has resulted in a significant interest from the advertising community in targeting advertisements to mobile devices.

One exemplary system for directing targeted advertising or transmitting information to end users, using wireless or mobile media, including cellular media, is disclosed in U.S. Patent Pub. No. 2007/0055565.
The system interconnects (a) advertisers or sponsors, (b) wireless device users ("system users"), and (c) wireless telecommunications companies ("telecoms"), via (d) an intermediary or "hub entity." The hub entity maintains and controls computer operated software and data bases to direct specific advertising or information to targeted system users, collects subscription fees and distributes advertising fees, and determines the effectiveness of various advertising or information transmitted to specific system users.

U.S. Patent Application Publication No. 2003/0208588 to Segal provides systems and methods for gathering information about a person, maintaining this information within a protective zone that is isolated from third parties, maintaining the identities of available third party data content, producing a set of identified targeted third party data content based upon the gathered information and the identities of available third party data content, and directing the identified targeted data content to an end user's computer. In this way, detailed private information may be collected and processed within a protective zone to identify targeted data content, such as advertisements, for example, whereby the only information that leaves the protective zone are the requests for the identified targeted data content. These systems and methods can be utilized to obtain targeted third party medically-related data content without compromising one's privacy.

U.S. Patent Application Publication No. 2005/0282556 to Morris discloses, in a first aspect, a method that includes specifying on the electronic device a request for a product or service, and receiving in the electronic device advertising information related to a local merchant from the local merchant and transmitted over a wireless local area network (LAN). The method also includes displaying on the electronic device the advertising information if the product or service offered by the local merchant matches the request, whereby the electronic device collects location sensitive information without requiring the electronic device to specify its location. In a second aspect, the present invention is a system that includes a computer system associated with at least one local merchant that is coupled to the wireless LAN and includes at least one advertiser for transmitting over the wireless LAN advertising information related to each of the at least one local merchants. The system also includes an electronic device that is capable of connecting to the wireless LAN. The electronic device includes a locator for connecting the electronic device to the wireless LAN and for receiving the advertising information transmitted by the computer system associated with the at least one merchant, and a display for displaying the advertising information if the product or service offered by the local merchant matches a request from the electronic device for a product or service.

U.S. Patent Application Publication No. 2004/0083271 to Tosey discloses redirecting a notification to a wireless user device includes registering for notification of incoming messages for an account on a message server, the incoming messages being directed to an account on the message server. The redirecting also includes receiving at least one notification and redirecting the at least one notification through a firewall to a wireless user device associated with the account. The remote message server is in communication with a network protected by the firewall. According to one aspect, a cradle is configured to perform the redirection. According to another aspect, the cradle is associated with a remote desktop computer in communication with the network.

U.S. Patent No. 7,020,460 to Sherman et al. discloses a method for providing a mobile network notification service including receiving a first telephone number associated with a first notification service customer. The method further includes receiving an indication that a first telephone corresponding to the first telephone number has been powered on and is available in a mobile network. A mobile network status of a second telephone corresponding to a second telephone number is determined in response to locating the second telephone number in a notification list associated with the first notification service customer. The status is transmitted to the first notification service customer.

Despite the advantages of such approaches, further functionality may be desirable for providing notifications, such as advertisements, to mobile wireless communications device users.

The invention is defined in the independent claims. Some optional features of the invention are defined in the dependent claims.

### Brief Description of the Drawings

FIG. 1 is a schematic block diagram of a communications system in accordance with one exemplary embodiment.

FIG. 2 is a flow diagram illustrating exemplary communications method embodiments.

FIG. 3 is a schematic block diagram of an alternative embodiment of the system of FIG. 1.

FIG. 4 is a flow diagram illustrating alternative exemplary communications method aspects of the method of FIG. 2.

FIG. 5 is a schematic block diagram of an alternative embodiment of the communications system of FIG. 1.

FIG. 6 is a schematic block diagram illustrating exemplary components of a mobile wireless communications device that may be used for determining vehicle traffic rate or density, or passing pedestrian traffic density, in accordance with exemplary embodiments.

FIG. 7 is a schematic block diagram of yet another alternative embodiment of the communications system of FIG. 1.

### Detailed Description

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

The present application advantageously addresses the technical problem of how to allow notifications, such as advertisements, to be personalized for a known demographic of users, while at the same time providing privacy to users by not disseminating their personal or private information beyond the trusted confines of a protected computing environment. Considered alternatively, the present application addresses the technical problem of how to provide personalized notifications (e.g., advertisements) to mobile wireless communications device users when the notification provider is not permitted access to personal information of the device users.

This technical problem is addressed through a communications system which may include at least one mobile wireless communications device associated with a respective user and storing personalizing information for the user, a network server within a protected computer network, and a notification server outside of the protected computer network for generating generic notifications. The network server may be for receiving generic notifications from the notification server and sending the generic notifications to the at least one mobile wireless communications device. Moreover, the at least one mobile wireless communications device may be for receiving the generic notifications from the network server and generating personalized notifications based upon the personalizing information and the received generic notifications.

The personalizing information may include a user name, and the at least one mobile wireless communications device may be configured to generate the personalized notifications by adding the user name to the generic notifications. Further, the generic notifications may have at least one target field therein, and the at least one mobile wireless communications may be configured to generate the completed notifications by filling the personalizing information in the at least one target field. Additionally, the generic notifications may have at least one key word therein, and the at least one mobile wireless communications device may generate the personalized notifications by replacing the at least one key word with the personalizing information.

In addition, the at least one mobile wireless communications device may be configured to further store notification preferences, and the at least one mobile wireless communications device may be configured to further filter the generic notifications based upon the notification preferences. By way of example, the notification preferences may include user notification preferences. The at least one mobile wireless communications device may also be configured to generate a report of personalized notifications and send the report to the notification server.

Furthermore, the system may also include a computer firewall module connected between the network server and the wide area network to provide the protected computing network. In accordance with one example, the notification server may comprise an advertising server, and the notifications may comprise advertisements. Additionally, the at least one mobile wireless communications device may also be configured to send and receive electronic mail (email) messages, and the network server may further reconcile email messages between an email inbox on the at least one mobile wireless communications device and an email inbox within the protected computer network. Moreover, the network server may be configured to communicate with the notification server via a wide area network, such as the Internet, for example.

A mobile wireless communications device is also provided and may include at least one memory for storing personalizing information for a user associated with the mobile wireless communications device, a wireless receiver, and a processor. The processor may be configured to cooperate with the at least one memory and wireless receiver to receive generic notifications from a notification server, and generate personalized notifications based upon the personalizing information and the received generic notifications.

A related communications method may include storing personalizing information for a user on at least one mobile wireless communications device for communicating with a protected computer network, and receiving generic notifications from a notification server outside of the protected computer network. The method may further include generating personalized notifications at the at least one mobile wireless communications device based upon the personalizing information and the generic notifications.

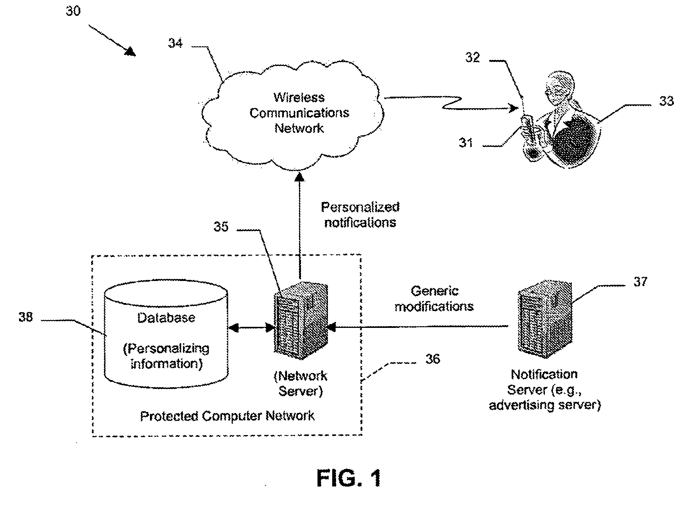

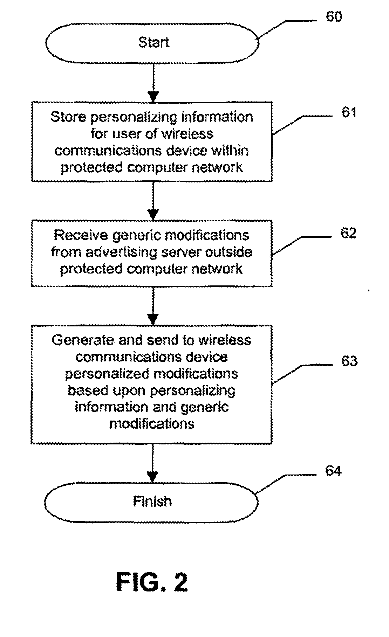

Referring initially to FIGS. 1 and 2, a communications system 30 and associated communications method aspects are first described. The system 30 illustratively includes one or more mobile wireless communications devices 31 and associated antenna 32. A respective user 33 is associated with the device 31. Moreover, the system 30 further illustratively includes a wireless communications network 34, a network server 35 within a protected computer network 36, and a notification server 37, which may comprise an advertising server, outside of the protected computer network. However, it should be noted that in different embodiments notifications other than advertisements may be used (e.g., news notifications, etc.)

By way of example, the device **31** and wireless communications network **34** may operate in accordance with a cellular, wireless LAN (e.g., 802.11x, Bluetooth, etc.), WiMAX, satellite, etc., communications format, as will be appreciated by those skilled in the art. In some embodiments, more than one such wireless communications format may be used in the same device (e.g., cellular, wireless LAN, and Bluetooth). Moreover, the device **31** also illustratively includes one or more associated antennas **32.** Various types of mobile wireless communications devices **31** may be used, such as mobile phones, PDAs, laptop computers, wireless-enabled cameras, wireless-enabled media players, etc., for example. Moreover, the wireless communications network **34** (or portions thereof) may also reside within the protected computer network **36,** such as in the case of a wireless LAN, WiMAX, etc., network.

Beginning at Block **60,** the network server **35** may advantageously store within the protected computer network (e.g., in a database **38**) personalizing information for the user **33** of the device **31,** at Block **61.** By way of example, the personalizing information may include a name of the user, as well as other applicable information such as title (e.g., Mr., Mrs., Ms., etc.), occupation, degrees, residence information, age or age group, race or ethnicity, gender, income or income bracket, geographic location, political affiliation, religion, marital status, number of children, etc. Moreover, additional information may be stored in the database **38** as well, such as advertising preference information. More particularly, the advertising preference information may include preferences of the user (e.g., the types of products or services, or both, the user is interested (or not interested) in), such as restaurants, songs, recording artists, actors, movies, TV shows, brooks, authors, etc. In some embodiments, network advertising preferences may additionally (or instead) be stored as well, such as what types of advertisements may or may not (or both) be communicated to user devices 31, as will be discussed further below.

By way of example, the network server **35** and database **38** may be implemented using a combination of hardware (e.g., microprocessor, memory, etc.) and software components or modules. Moreover, the various functions of the network server **36** and database **38** may be implemented in a single server or database, or implemented using multiple different servers and databases, as will also be appreciated by those skilled in the art.

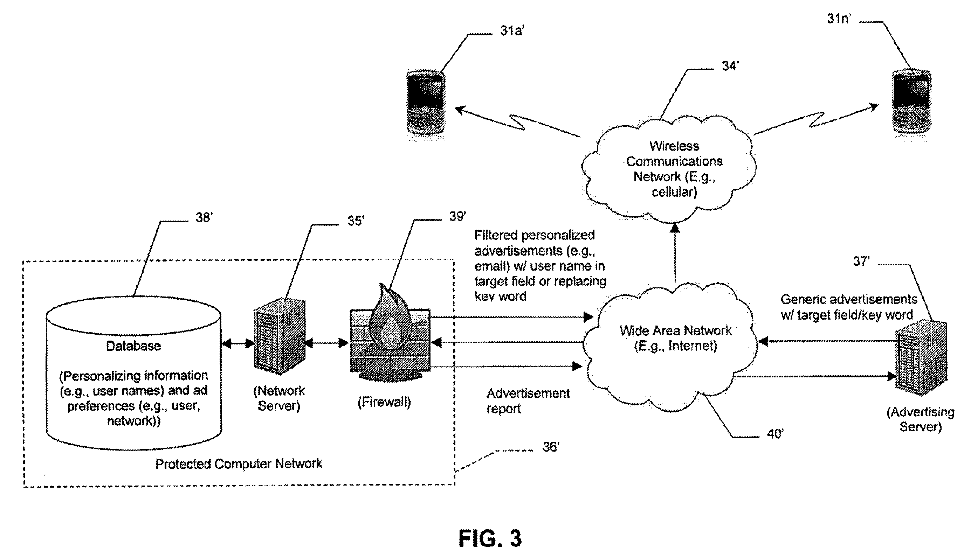

The advertising server **37** is for generating generic advertisements to be received by the network server **35,** at Block **62.** More particularly, the generic advertisements may be of a general nature and not specifically addressed to, targeted to, tailored to, or otherwise personalized for any particular user. However, these advertisements may advantageously be generated with a "placeholder" to allow for later personalisation, such as a target field(s) or key word(s) that can later be filled in with or replaced by the personalizing information to generate personalized advertisement for sending to the user(s) **33,** at Block **63**, thus concluding the method illustrated method in FIG. 3 (Block **64**).

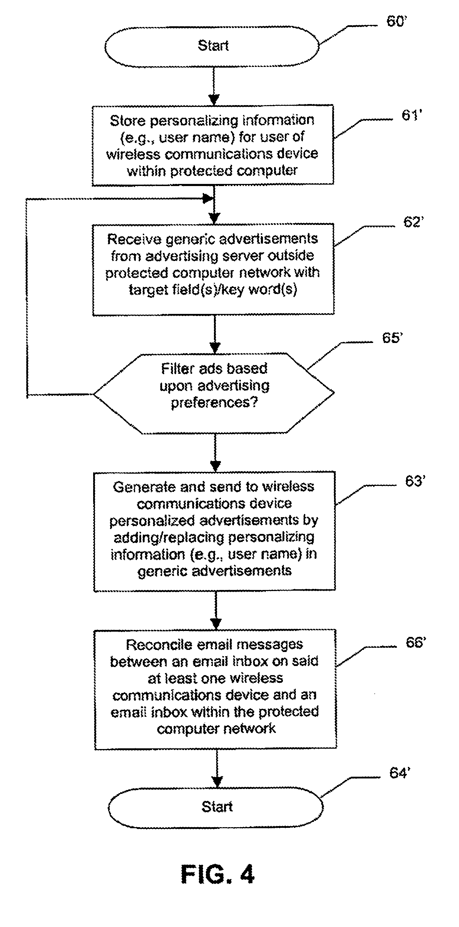

Taking the example of a written text advertisement, such as in the form of an electronic mail (email) message, a target field may be a tag (e.g., an extensible markup language (XML) tag) or other identifier within the email message that identifies where the user's name, title, etc., is to be inserted. As such, upon receiving a generic advertisement from the advertising server **37,** the network server **35** searches and replaces the target field(s) therein with the corresponding personalizing information of the user(s) **33** to which a personalized advertisement is to be sent (Block **63**', FIG. 4). In the example of a key word, the generic advertisement email message may include a generic greeting of "Dear Customer," which phrase the network server **35** may replace with "Dear Jason," for a user named Jason, etc. Moreover, the advertisements need not be text only, and may include other items (e.g., images) in addition to, or instead of, text, as will be appreciated by those skilled in the art. Combinations of these two approaches may be used in some embodiments, as well as other suitable approaches for personalizing a generic advertisement with personalizing information, as will also be appreciated by those skilled in the art. Another example in that with the personalizing information, a photograph or graphic may be tailored to the user **33,** such as in an advertisement for clothing showing a model of the same gender, age group, size, etc.

An advantage of storing the personalizing information in a database **38** within the protected computer network **36** is that this information may be kept private and inaccessible to the advertising server. That is, this approach advantageously addresses the technical problem of how to allow advertisers to achieve personalized advertisements to a known demographic of users, while at the same time providing privacy to users by not disseminating their personal or private information beyond the trusted confines of the protected computing environment **36.**

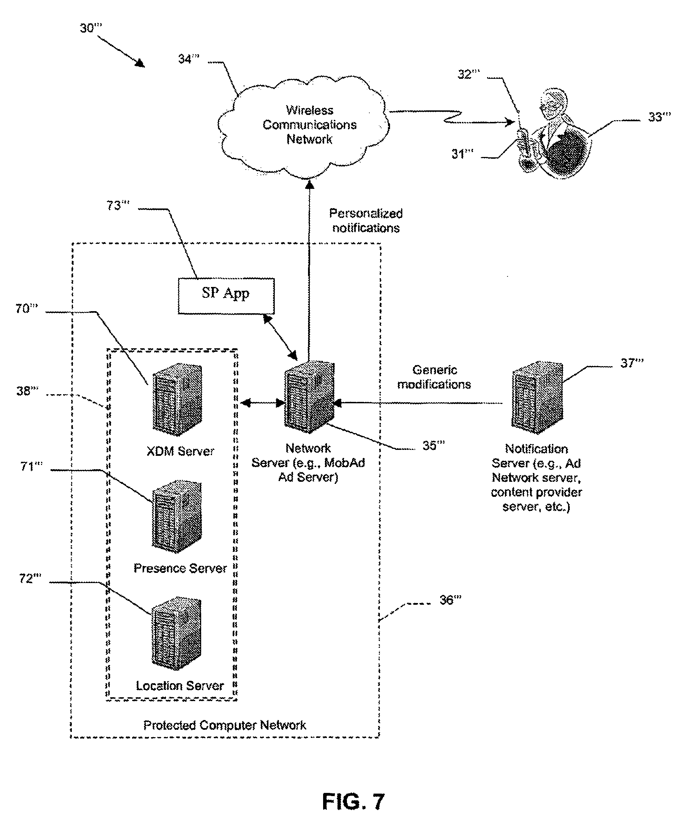

Referring additionally to FIG. 7, in some embodiments, the system **30** may advantageously be implemented in accordance with the Open Mobile Alliance (OMA) Mobile Advertising Requirements (see OMA-RD-Mobile-Advertising-V1_0-20080805-C, 2008 Open Mobile Alliance Ltd., Candidate Version 1.0, available at http://www.openmobilealliance.org./Technical/release_program /mobad_v1_0.aspx). In accordance with the OMA MobAd specification, the notification server **37'"** may be implemented as an advertiser server or Ad Network server, content provider server, etc., that will provide generic notifications to the network server **35'",** as will be appreciated by those skilled in the art. Moreover, in the context of OMA MobAd specification, the network server **35'"** may be implemented as a MobAd Ad Server, as will also be appreciated by those skilled in the art. In this regard, the MobAd Ad Server **35'"** may access personalized information of users from a series of data repositories **38'"** including, for example, one or more of an extensible markup language (XML) document management (XDM) server **70'",** presence server **71'",** location server **72'",** etc. The MobAd Ad Server **35'"** may then personalize the generic notification while maintaining the user's privacy, and send the personalized notification to the device **31'".**

Still within the context of the OMA MobAd specification, generic notifications received by the MobAd Ad Server **35'"** may be passed to a service provider application (i.e., SP App) **73'"** without being personalized. The SP App **73'"** is an application running in the same protected network as the MobAd Ad Server **35'"** and may have its own personalized information about the user. In that case the generic notifications are personalized by the SP App **73'"** in the protected computer network **36'"** before being sent to the user. Generally speaking, the network (or MobAd Ad) server **35'"** may be the main receiver of generic notifications, and may dispatch such generic notifications to various specific application servers running in the same protected computer network **36'",** which will personalize the generic notifications before sending them to the device **31'".**

In the example of FIG. 3, the system **30'** illustratively includes a firewall module **39',** which again may be implemented using a combination of hardware and software components, that defines the protected computer network **36',** as will be appreciated by those skilled in the art. That is, the network server **35'** and database **38'** are illustratively insulated or protected from external networks, such as wide area network **40'** like the Internet, through which the network server **35'** and the advertising server **37'** may communicate. As a result, since users know that their personal or private information is being Maintained within a secure environment and not disclosed to advertisers, they may be more readily willing to participate in an advertising program where advertisements are delivered to their mobile devices **31** based upon this information. Other suitable approaches for protecting or securing user data so that it is inaccessible by the advertising server **37'** or other outside sources in addition to, or instead or, the firewall module **39'** may also be used in some embodiments, as will be appreciated by those skilled in the art.

As noted above, the network server **35'** may further store advertising preferences within the protected computer network **36'** (e.g., within the database 38'). These advertising preferences may then be used to filter the generic advertisements, so that undesirable or impermissible advertisements are not sent to the devices **31a'-31n'.** If the advertising preferences are user advertising preferences, that is, preferences set by or specific to individual users, then the network server **35'** may advantageously filter or exclude advertisements of a type that the user does not wish to receive. For example, a user who is dieting may not want to receive advertisements for food, desserts, or restaurants. As such, key word or category based filters may be set so that any advertisements provided to the network server **35'** that meet the defined criteria will be filtered out and not converted to personal advertisements for, nor sent to, the respective user device **31'.**

In addition to, or instead of, user advertising preferences, network advertising preferences may also be stored that apply to all or different subsets of network users. By way of example, if the protected computer network **36'** is implemented as a company or corporate computer network, then network advertising preferences may be stored to set corporate-wide advertising policies for filtering the generic advertisements, at Block **65'.** For example, a given corporation may exclude any advertisements from being sent to company employees from a competing corporation.

In a corporate implementation, the corporation may establish an account with a third party advertising service to provide advertisements for distribution to corporate users via the advertising server **37'.** This may be done in exchange, for monetary consideration to the corporation, for example. Another potential implementation is that the protected computer network **36'** is an Internet service provider (ISP), and clients are provided Internet access for a reduced (or no) fee in exchange for agreeing to receive the advertisements on their registered mobile devices.

One exemplary approach for implementing the systems **30** or **30'** in a corporate setting is through an enterprise server, such as the BlackBerry^{®} Enterprise Server (BES) from the present Assignee Research In Motion, Ltd. In particular, a BES generally comprises a wireless platform for wireless email, Personal Information Management (PIM), instant messaging (IM) and other corporate data. A network server **35',** such as a BES, may advantageously reconcile email messages between respective email inbox (or other email boxes) on the wireless communications device **31a'-31n'** and corresponding email inboxes within the protected computer network **36',** at Block **66',** as will be appreciated by those skilled in the art.

The foregoing filtering or personalized advertisement features, or both, may advantageously be incorporated as part of such a corporate BES implementation, as will be appreciated by those skilled in the art. Moreover, a similar home BES implementation (or other suitable implementation) may also be used for a home network implementation. In such an application, personalized advertisements may be sent to multiple members in a family, with user advertising preferences or network advertising preferences, or both (or no filtering preferences).

A server such as a BES may or may not locally store information such as GPS data, browser history, browser bookmarks, or WiFi network data, for example. In an exemplary implementation, the BES includes MDS and other servers including Mobile Voice Services which locally maintain such information. Such a server may be able to tie into other servers/databases as appropriate to extract the information as needed. Both single and distributed server scenarios may be used. That is, in some implementations the information may be included as part of a single server box, and other implementations may include distributed servers to which the BES has access, as will be appreciated by those skilled in the art.

In accordance with another advantageous feature, the network server **35'** may generate a report of personalized advertisements sent to the mobile wireless communications devices **31a'-31n',** and send the report to the advertising server **37'** via the wide area network **40'.** This may be particularly appropriate for accounting purposes to determine what monies, etc., are owed if filtering is used and not all of the advertisements being sent to the network server **35'** are in fact being sent to the devices **31a'-31n'.**

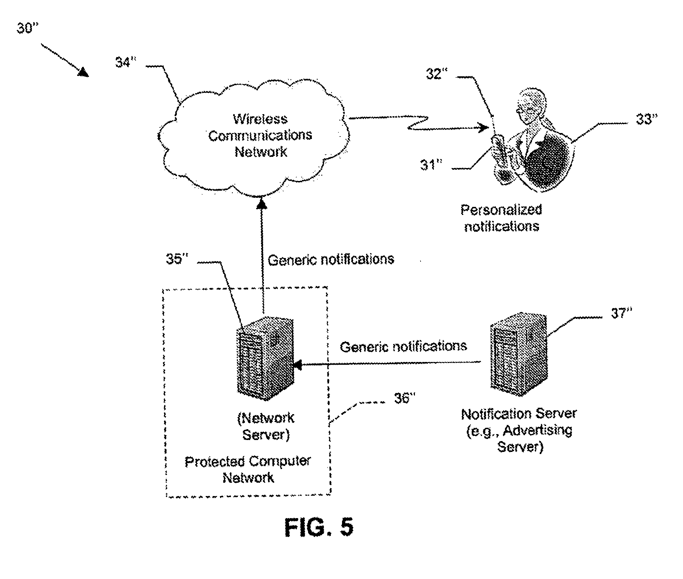

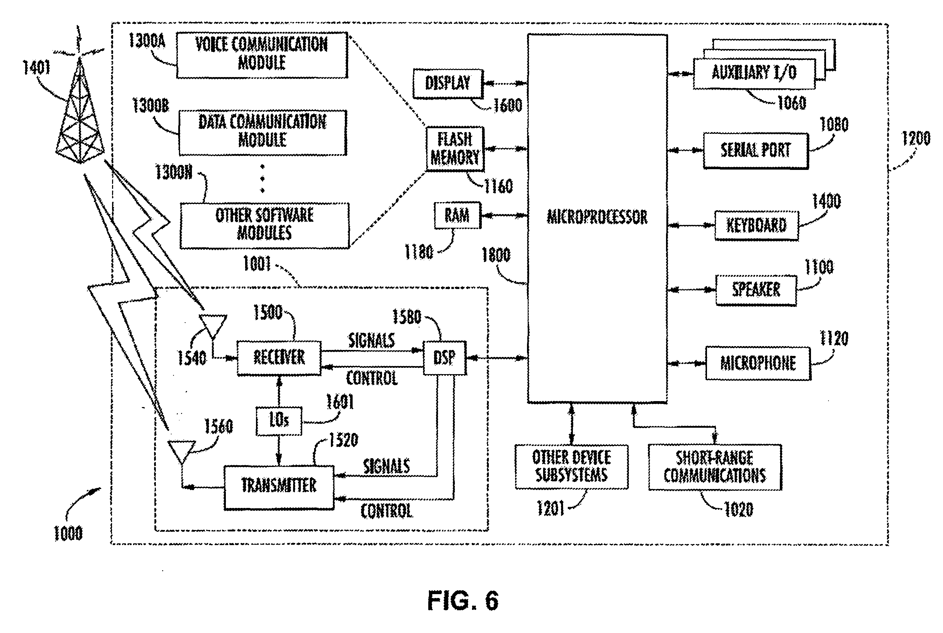

Turning now additionally to FIG. 5, in another exemplary embodiment the notification personalization functions of the network server **35** described above may instead (or in cooperation therewith) be performed by the wireless communications device **31''.** More particularly, the r device **31''** may include one or more memories (e.g., a FLASH memory **1160,** RAM memory **1180,** etc., as seen in FIG. 6) for storing the personalizing information, as well as a processor (e.g., the microprocessor **1800** shown in FIG. 6). The processor may therefore advantageously generate personalized notifications, based upon generic notifications received through the network server **35''** (or directly from the notification server **37''** in some embodiments) based upon the stored personalizing information and the received generic notifications in the same manner discussed above, as will be appreciated by those skilled in the art.

In the context of the OMA MobAd Specification, the Ad Engine, which is the advertising engine running on the device **31",** will receive the generic notification and personalize them according to the above-desired method. Alternatively, the Ad Engine may receive the generic notifications and pass them to an Ad App (i.e., an ad aware application). The Ad App will then personalize the notifications according to their respective particular context. For instance, a name field may be replaced by the user name known by that particular Ad App. In some cases this may be a surname, avatar name, networking nickname, etc.

Exemplary components of a mobile wireless communications device **1000** that may be used in accordance with the system **30** are further described in the example below with reference to FIG. 6. The device **1000** illustratively includes a housing **1200**, a keypad **1400** and an output device **1600**. The output device shown is a display **1600**, which may comprise a full graphic LCD. In some embodiments, display **1600** may comprise a touch-sensitive input and output device. Other types of output devices may alternatively be utilized. A processing device **1800** is contained within the housing **1200** and is coupled between the keypad **1400** and the display **1600**. The processing device **1800** controls the operation of the display **1600**, as well as the overall operation of the mobile device **1000**, in response to actuation of keys on the keypad **1400** by the user. In some embodiments, keypad **1400** may comprise a physical keypad or a virtual keypad (e.g., using a touch-sensitive interface) or both.

The housing **1200** may be elongated vertically, or may take on other sizes and shapes (including clamshell housing structures) . The keypad **1400** may include a mode selection key, or other hardware or software for switching between text entry and telephony entry.

In addition to the processing device **1800**, other parts of the mobile device **1000** are shown schematically in FIG. 6. These include a communications subsystem **1001**; a short-range communications subsystem **1020**; the keypad **1400** and the display **1600**, along with other input/output devices **1060**, **1080**, **1100** and **1120**; as well as memory devices **1160**, **1180** and various other device subsystems **1201**. The mobile device **1000** may comprise a two-way RF communications device having voice and data communications capabilities. In addition, the mobile device **1000** may have the capability to communicate with other computer systems via the Internet.

Operating system software executed by the processing device **1800** may be stored in a persistent store, such as the flash memory **1160**, but may be stored in other types of memory devices, such as a read only memory (ROAM) or similar storage element. In addition, system software, specific device applications, or parts thereof, may be temporarily loaded into a volatile store, such as the random access memory (RAM) **1180**. Communications signals received by the mobile device may also be stored in the RAM **1180**.

The processing device **1800**, in addition to its operating system functions, enables execution of software applications **1300A-1300N** on the device **1000**. A predetermined set of applications that control basic device operation, such as data and voice communications **1300A** and **1300B**, may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401**. The PIM data item may be seamlessly integrated, synchronized and updates via the wireless network **1401** with the device user's corresponding data items stored or associated with a host computer system.

Communication functions, including data and voice communications, are performed through the communications subsystem **1001**, and possibly through the short-range communications subsystem. The communications subsystem **1001** includes a receiver **1500**, a transmitter **1520**, and one or more antennas **1540** and **1560**. In addition, the communications subsystem **1001** also includes a processing module, such as a digital signal processor (DSP) **1580**, and local oscillators (LOs) **1601**. The specific design and implementation of the communications subsystem **1001** is dependent upon the communications network in which the mobile device **1000** is intended to operate. For example, a mobile device **1000** may include a communications subsystem 1001 designed to operate with the Mobitex^{™}, Data TAC^{™} or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000**. The mobile device **1000** may also be compliant with other communications standards such as 3GSM, 3G, UMTS, 4G, etc.

Network access requirements vary depending upon the type of communication systems, For example, in the Mobitex and DataTAC networks, mobile devices are registered on the network using a unique personal identification number or PIN associated with each device. In GPRS networks, however, network access is associated with a subscriber or user of a device. A GPRS device therefore utilizes a subscriber identity module, commonly referred to as a SIM card, in order to operate on a GPRS network.

When required network registration or activation procedures have been completed, the mobile device **1000** may send and receive communications signals over the communication network **1401**. Signal received from the communications network **1401** by the antenna **1540** are routed to the receiver **1500**, which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560**.

In addition to processing communications signals, the DSP **1580** provides for control of the receiver **1500** and the transmitter **1520**. For example, gains applied to communications signals in the receiver **1500** and transmitter **1520** may be adaptively controlled through automatic gain control algorithms implemented in the DSP **1580**.

In a data communications mode, a received signal, such as a text message or web page download, is processed by the communications subsystem **1001** and is input to the processing device **1800**. The received signal is then further processed by the processing device **1800** for an output to the display **1600**, or alternatively to some other auxiliary I/O device **1060**. A device user may also compose data items, such as e-mail messages, using the keypad **1400** and/or some other auxiliary I/O device **1060**, such as a touchpad, a rocker switch, a thumb-wheel, track ball, or some other type of input device. The composed data items may then be transmitted over the communications network **1401** via the communications subsystem **1001**.

In a voice communications mode, overall operation of the device is substantially similar to the data communications mode, except that received signals are output to a speaker **1100**, and signals for transmission are generated by a microphone **1120**. Alternative voice or audio I/O subsystems, such as a voice message recording subsystem, may also be implemented on the device **1000**. In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth™ communications module to provide for communication with similarly-enabled systems and devices.

Many modifications and other embodiments will come to the mind of one skilled in the art having the benefit of the teachings presented in the foregoing descriptions and the associated drawings. Therefore, it its understood that various modifications and embodiments are intended to be included within the scope of the appended claims.

## Claims

1. A communications system (30") comprising:
at least one mobile wireless communications device (31") associated with a respective user (33") and storing personalizing information for the user (33");
a network server (35") within a protected computer network (36"); and
a notification server (37") outside of the protected computer network configured to generate and send non-personalized generic notifications;
said network server configured to receive a generic notification sent from said notification server and send the generic notification to said at least one mobile wireless communications device;
said at least one mobile wireless communications device configured to receive the generic notification from said network server and adapt the received generic notification based upon the personalizing information to generate a personalized notification.

2. The communications system (30") of Claim 1 wherein the personalizing information comprises a user name, and wherein said at least one mobile wireless communications device (31") is configured to adapt the generic notification by adding the user name to the generic notification.

3. The communications system (30") of Claim 1 wherein the generic notifications have at least one target field therein, and wherein said at least one mobile wireless communications device (31") is configured to adapt a generic notification by filling the personalizing information in the at least one target field.

4. The communications system (30") of Claim 1 wherein the generic notifications have at least one key word therein, and wherein said at least one mobile wireless communications device (31") is configured to adapt a generic notification by replacing the at least one key word with the personalizing information.

5. The communications system (30") of Claim 1 wherein said at least one mobile wireless communications device (31") is further configured to store notification preferences, and wherein said at least one mobile wireless communications device is further configured to filter the generic notification based upon the notification preferences.

6. The communications system (30") of Claim 5 wherein the notification preferences comprise user notification preferences.

7. The communications system (30") of Claim 5 wherein said at least one mobile wireless communications device (31") is further configured to generate a report of personalized notifications and sends the report to said notification server.

8. The communications system (30") of Claim 1 further comprising a computer firewall module connected between the network server (35") and the wide area network to provide the protected computing network.

9. The communications system (30") of Claim 1 wherein said notification server comprises an advertising server, and wherein the notifications comprise advertisements.

10. The communications system (30") of Claim 1 wherein said at least one mobile wireless communications device (31") is also configured to receive electronic mail "email" messages; and wherein said network server is further configured to (35") reconcile email messages between an email inbox on said at least one mobile wireless communications device and an email inbox within the protected computer network (36").

11. A communications method comprising:
storing personalizing information for a user (33") on at least one mobile wireless communications device (31") for communicating with a protected computer network (36");
receiving non-personalized generic notifications from a notification server outside of the protected computer network; and
adapting, at the at least one mobile wireless communications device, a generic notification based upon the personalizing information thereby generating a personalized notification for presentation to a user of the at least one mobile wireless communications device.

12. The method of Claim 11 wherein the personalizing information comprises a user name, and wherein adapting comprises adding the user name to the generic notification.

13. The method of Claim 11 wherein the generic notifications have at least one target field therein, and wherein adapting comprises filling the personalizing information in the at least one target field.

14. The method of Claim 11 wherein the generic notifications have at least one key word therein, and wherein adapting comprises replacing the at least one key word with the personalizing information.

15. The method of Claim 11 further comprising filtering notification templates based upon advertising preferences.

## Patentansprüche

1. Kommunikationssystem (30"), das aufweist:
zumindest eine mobile drahtlose Kommunikationsvorrichtung (31"), die zu einem jeweiligen Benutzer (33") gehört und Personalisierungsinformation für den Benutzer (33") speichert;
einen Netzwerkserver (35") in einem geschützten Computernetzwerk (36"); und
einen Benachrichtigungsserver (37") außerhalb des geschützten Computernetzwerks, der konfiguriert ist, nicht-personalisierte generische Benachrichtigungen zu erzeugen und zu senden;
wobei der Netzwerkserver konfiguriert ist, eine generische Benachrichtigung zu empfangen, die von dem Benachrichtigungsserver gesendet wird, und die generische Benachrichtigung an die zumindest eine mobile drahtlose Kommunikationsvorrichtung zu senden;
wobei zumindest eine mobile drahtlose Kommunikationsvorrichtung konfiguriert ist, die generische Benachrichtigung von dem Netzwerkserver zu empfangen und die empfangene generische Benachrichtigung basierend auf der Personalisierungsinformation anzupassen, um eine personalisierte Benachrichtigung zu erzeugen.

2. Kommunikationssystem (30") gemäß Anspruch 1, wobei die Personalisierungsinformation einen Benutzernamen aufweist und wobei die zumindest eine mobile drahtlose Kommunikationsvorrichtung (31") konfiguriert ist, die generische Benachrichtigung durch Hinzufügen des Benutzernamens zu der generischen Benachrichtigung anzupassen.

3. Kommunikationssystem (30") gemäß Anspruch 1, wobei die generischen Benachrichtigungen zumindest ein Ziel-Feld darin haben und wobei die zumindest eine mobile drahtlose Kommunikationsvorrichtung (31") konfiguriert ist, eine generische Benachrichtigung anzupassen durch Eingeben der Personalisierungsinformation in das zumindest eine Ziel-Feld.

4. Kommunikationssystem (30") gemäß Anspruch 1, wobei die generischen Benachrichtigungen zumindest ein Schlüsselwort darin haben und wobei die zumindest eine mobile drahtlose Kommunikationsvorrichtung (31") konfiguriert ist, eine generische Benachrichtigung anzupassen durch Ersetzen des zumindest einen Schlüsselworts mit der Personalisierungsinformation.

5. Kommunikationssystem (30") gemäß Anspruch 1, wobei die zumindest eine mobile drahtlose Kommunikationsvorrichtung (31") weiter konfiguriert ist, Benachrichtigungspräferenzen zu speichern, und wobei die zumindest eine mobile drahtlose Kommunikationsvorrichtung weiter konfiguriert ist, die generische Benachrichtigung basierend auf den Benachrichtigungspräferenzen zu filtern.

6. Kommunikationssystem (30") gemäß Anspruch 5, wobei die Benachrichtigungspräferenzen Benutzer-Benachrichtigungspräferenzen aufweisen.

7. Kommunikationssystem (30") gemäß Anspruch 5, wobei die zumindest eine mobile drahtlose Kommunikationsvorrichtung (31") weiter konfiguriert ist, einen Bericht der personalisierten Benachrichtigung zu erzeugen und den Bericht an den Benachrichtigungsserver zu senden.

8. Kommunikationssystem (30") gemäß Anspruch 1, das weiter ein Computer-Firewall-Modul aufweist, das zwischen dem Netzwerkserver (35") und dem Weitbereichsnetzwerk verbunden ist, um das geschützte Computernetzwerk vorzusehen.

9. Kommunikationssystem (30") gemäß Anspruch 1, wobei der Benachrichtigungsserver einen Werbungs-Server aufweist und wobei die Benachrichtigungen Werbeanzeigen aufweisen.

10. Kommunikationssystem (30") gemäß Anspruch 1, wobei die zumindest eine mobile drahtlose Kommunikationsvorrichtung (31") auch konfiguriert ist, elektronische Mail("Email")-Nachrichten zu empfangen; und wobei der Netzwerkserver (35") weiter konfiguriert ist, Email-Nachrichten zwischen einer Email-Inbox an der zumindest einen mobilen drahtlosen Kommunikationsvorrichtung und einer Email-Inbox in dem geschützten Computernetzwerk (36") abzugleichen.

11. Kommunikationsverfahren, das aufweist:
Speichern von Personalisierungsinformation für einen Benutzer (33") auf zumindest einer mobilen drahtlosen Kommunikationsvorrichtung (31") zum Kommunizieren mit einem geschützten Computernetzwerk (36");
Empfangen von nicht-personalisierten generischen Benachrichtigungen von einem Benachrichtigungsserver außerhalb des geschützten Computernetzwerks; und
Anpassen, an der zumindest einen mobilen drahtlosen Kommunikationsvorrichtung, einer generischen Benachrichtigung basierend auf der Personalisierungsinformation, **dadurch** Erzeugen einer personalisierten Benachrichtigung zur Anzeige für einen Benutzer der zumindest einen mobilen drahtlosen Kommunikationsvorrichtung.

12. Verfahren gemäß Anspruch 11, wobei die Personalisierungsinformation einen Benutzernamen aufweist und wobei das Anpassen ein Hinzufügen des Benutzernamens zu der generischen Benachrichtigung aufweist.

13. Verfahren gemäß Anspruch 11, wobei die generischen Benachrichtigungen zumindest ein Ziel-Feld darin haben und wobei das Anpassen ein Eingeben der Personalisierungsinformation in das zumindest eine Ziel-Feld aufweist.

14. Verfahren gemäß Anspruch 11, wobei die generischen Benachrichtigungen zumindest ein Schlüsselwort darin haben und wobei das Anpassen ein Ersetzen des zumindest einen Schlüsselworts mit der Personalisierungsinformation aufweist.

15. Verfahren gemäß Anspruch 11, das weiter ein Filtern von Benachrichtigungsvorlagen basierend auf Werbungspräferenzen aufweist.

## Revendications

1. Système de communication (30"), comprenant :
au moins un dispositif de communication mobile sans fil (31") , associé à un utilisateur respectif (33") et stockant des informations de personnalisation pour l'utilisateur (33") ;
un serveur de réseau (35''), au sein d'un réseau d'ordinateurs protégé (36") ; et
un serveur de notifications (37"), extérieur au réseau d'ordinateurs protégé, configuré pour produire et envoyer des notifications génériques, non personnalisées ;
ledit serveur de réseau étant configuré pour recevoir une notification générique envoyée par ledit serveur de notifications et pour envoyer la notification générique audit au moins un dispositif de communication mobile sans fil ;
ledit au moins un dispositif de communication mobile sans fil étant configuré pour recevoir la notification générique dudit serveur de réseau et pour adapter la notification générique reçue sur la base des informations de personnalisation, pour produire une notification personnalisée.

2. Système de communication (30") selon la revendication 1, dans lequel les informations de personnalisation comprennent un nom de l'utilisateur et dans lequel ledit au moins un dispositif de communication mobile sans fil (31") est configuré pour adapter la notification générique en ajoutant le nom de l'utilisateur à la notification générique.

3. Système de communication (30") selon la revendication 1, dans lequel les notifications génériques contiennent au moins une zone de destination et dans lequel ledit au moins un dispositif de communication mobile sans fil (31") est configuré pour adapter une notification générique en plaçant les informations de personnalisation dans ladite au moins une zone de destinataire.

4. Système de communication (30") selon la revendication 1, dans lequel les notifications génériques contiennent au moins un mot-clef et dans lequel ledit au moins un dispositif de communication mobile sans fil (31") est configuré pour adapter une notification générique en remplaçant ledit au moins un mot-clef à l'aide des informations de personnalisation.

5. Système de communication (30") selon la revendication 1, dans lequel ledit au moins un dispositif de communication mobile sans fil (31") est en outre configuré pour stocker des préférences de notification et dans lequel ledit au moins un dispositif de communication mobile sans fil est en outre configuré pour filtrer la notification générique en fonction des préférences de notification.

6. Système de communication (30") selon la revendication 5, dans lequel les préférences de notification comprennent des préférences de notification de l'utilisateur.

7. Système de communication (30") selon la revendication 5, dans lequel ledit au moins un dispositif de communication mobile sans fil (31") est en outre configuré pour produire un rapport de notifications personnalisées et envoie ledit rapport audit serveur de notifications.

8. Système de communication (30") selon la revendication 1, comprenant en outre un module de coupe-feu informatique connecté entre le serveur de réseau (35") et le réseau étendu, afin de constituer le réseau d'ordinateurs protégé.

9. Système de communication (30") selon la revendication 1, dans lequel ledit serveur de notifications comprend un serveur de publicités et dans lequel les notifications contiennent des publicités.

10. Système de communication (30") selon la revendication 1, dans lequel ledit au moins un dispositif de communication mobile sans fil (31") est en outre configuré pour recevoir des messages de courrier électronique, « courriel » ; et dans lequel ledit serveur de réseau (35") est en outre configuré pour synchroniser des messages de courriel entre une boîte de courriel d'entrée sur ledit au moins un dispositif de communication mobile sans fil et une boîte de courriel d'entrée à l'intérieur du réseau d'ordinateurs protégé (36").

11. Procédé de communication, comprenant les étapes consistant à :
stocker des informations de personnalisation pour un utilisateur (33") sur au moins un dispositif de communication mobile sans fil (31''), afin de communiquer avec un réseau d'ordinateurs protégé (36") ;
recevoir des notifications génériques non personnalisées en provenance d'un serveur de notifications extérieur au réseau d'ordinateurs protégé ; et
adapter une notification générique sur ledit au moins un dispositif de communication mobile sans fil, à l'aide des informations de personnalisation, pour produire ainsi une notification personnalisée destinée à être présentée à un utilisateur dudit au moins un dispositif de communication mobile sans fil.

12. Procédé selon la revendication 11, dans lequel les informations de personnalisation comprennent un nom de l'utilisateur et dans lequel l'étape d'adaptation comprend l'addition du nom de l'utilisateur à la notification générique.

13. Procédé selon la revendication 11, dans lequel les notifications génériques comprennent au moins une zone de destinataire et dans lequel l'étape d'adaptation comprend le placement des informations de personnalisation dans ladite au moins une zone de destinataire.

14. Procédé selon la revendication 11, dans lequel les notifications génériques comprennent au moins un mot-clef et dans lequel l'étape d'adaptation comprend le remplacement dudit au moins un mot-clef par les informations de personnalisation.

15. Procédé selon la revendication 11, comprenant en outre l'étape consistant à filtrer des modèles de notifications sur la base de préférences publicitaires.
